# NEUE EUROPÄISCHE PATENTSCHRIFT

(11) **EP 1 130 965 B2**
(45) Veröffentlichungstag und Bekanntmachung des Hinweises auf die Entscheidung über den Einspruch: **04.04.2012**
(45) Hinweis auf die Patenterteilung: 29.10.2003
(21) Anmeldenummer: 99972493.3
(22) Anmeldetag: 05.11.1999
(51) Int. Cl.: A01N 43/80, A01N 43/56, A01N 37/42, A01N 35/06, A01N 25/32, A01N 47/36

(54) **KOMBINATIONEN AUS HERBIZIDEN UND SAFENERN**
COMBINATIONS OF HERBICIDES AND SAFENERS
COMBINAISONS D'HERBICIDES ET DE PHYTOPROTECTEURS

(30) Priorität: 21.11.1998 DE 19853827
(43) Veröffentlichungstag der Anmeldung: 12.09.2001
(73) Patentinhaber: Bayer CropScience AG, 40789 Monheim (DE)
(72) Erfinder: ZIEMER, Frank, D-65830 Kriftel (DE); WILLMS, Lothar, D-65719 Hofheim (DE); BIERINGER, Hermann, D-65817 Eppstein (DE); HACKER, Erwin, D-65239 Hochheim (DE)
(86) Internationale Anmeldenummer: PCT/EP1999/008470
(87) Internationale Veröffentlichungsnummer: WO 2000/030447

(56) Entgegenhaltungen:
- EP-A- 0 298 680
- EP-A- 0 551 650
- WO-A-00/00029
- WO-A-00/00031
- WO-A-00/03591
- WO-A-00/03592
- WO-A-00/08932
- WO-A-00/08936
- WO-A-95/07897
- WO-A-96/14747
- WO-A-96/21357
- WO-A-97/45016
- WO-A-98/13361
- WO-A-99/16744
- WO-A-99/65314
- WO-A-99/66795
- DATABASE WPI Section Ch, Week 199744 Derwent Publications Ltd., London, GB; Class C02, AN 1997-480643 XP002134546 & ZA 9 610 635 A (RHONE-POULENC AGRIC LTD) , 27. August 1997 (1997-08-27)
- DATABASE CHEMABS [Online] CHEMICAL ABSTRACTS SERVICE, COLUMBUS, OHIO, US SPRAGUE, CHRISTY L. ET AL: "Enhancing the margin of selectivity of RPA 201772 in Zea mays with antidotes" retrieved from STN Database accession no. 132:60430 XP002134549 & WEED SCI. (1999), 47(5), 492-497 ,

## Beschreibung

Die Erfindung betrifft das technische Gebiet der Pflanzenschutzmittel, insbesondere Herbizid-Antidot-Kombinationen (Wirkstoff-Safener-Kombinationen), die hervorragend für den Einsatz gegen konkurrierende Schadpflanzen in Nutzpflanzenkulturen geeignet sind.

Einige neuere herbizide Wirkstoffe, die die p-Hydroxyphenyl-Pyruvat-Dioxygenase (HPPDO) inhibieren, zeigen sehr gute anwendungstechnische Eigenschaften und können in sehr kleinen Aufwandmengen gegen ein breites Spektrum von grasartigen und breitblättrigen Unkräutern eingesetzt werden (siehe z.B. M.P. Prisbylla et al., Brighton Crop Protection Conference - Weeds (1993), 731-738).

Aus US P 5627131, EP 551650 und EP 298680 sind spezielle Mischungen von Herbiziden mit Safenern, insbesondere Vorauflaufsafenern, bekannt.

Weiterhin ist aus verschiedenen Schriften bekannt, daß Herbiziden aus der Reihe der Benzoylcyclohexandione als Inhibitoren der para-Hydroxyphenylpyruvat-Dioxygenase derselbe Wirkmechanismus zugrunde liegt, wie denen aus der Reihe der Benzoylisoxazole, vergleiche dazu J. Pesticide Sci. 21, 473-478 (1996), Weed Science 45, 601-609 (1997), Pesticide Science 50, 83-84, (1997) und Pesticide Outlook, 29-32, (December 1996).

Jedoch sind viele dieser hochwirksamen Wirkstoffe nicht voll verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Nutzpflanzenkulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide oder einigen anderen Kulturen eingesetzt werden.

Zur Überwindung dieser Nachteile ist es bekannt, herbizide Wirkstoffe in Kombination mit einem sogenannten Safener oder Antidot einzusetzen. Ein Safener im Sinne der Erfindung ist eine Verbindung oder ein Gemisch von Verbindungen, das die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Klasse von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Herbizidklassen Safenerwirkung aufweist. So hat sich bei der Anwendung von Safenern zum Schutz der Nutzpflanzen vor Herbizidschädigungen gezeigt, daß die Safener in vielen Fällen immer noch gewisse Nachteile aufweisen können. Dazu zählen:
• der Safener vermindert die Wirkung der Herbizide gegen die Schadpflanzen,
• die nutzpflanzenschützenden Eigenschaften sind nicht ausreichend,
• in Kombination mit einem gegebenen Herbizid ist das Spektrum der Nutzpflanzen, in denen der Safener/Herbizid-Einsatz erfolgen soll, nicht ausreichend groß,
• ein gegebener Safener ist nicht mit einer ausreichend großen Anzahl von Herbiziden kombinierbar.

Aufgabe der vorliegenden Erfindung war es, Verbindungen zu finden, die in Kombination mit den oben genannten Herbiziden geeignet sind, die Selektivität dieser Herbizide gegenüber wichtigen Kulturpflanzen zu steigern.

Es wurde nun überraschend eine Gruppe von Verbindungen gefunden, die zusammen mit einem bestimmten, als HPPDO-Inhibitor wirksamen Herbizid die Selektivität dieses Herbizids gegenüber wichtigen Kulturpflanzen erhöhen.

Gegenstand der Erfindung ist daher ein herbizid wirksames Mittel, enthaltend eine Mischung aus
A. einer herbizid wirksamen Menge der Verbindungen der Formel 3-2 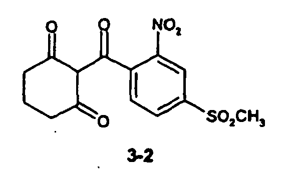 und
B. einer antidotisch wirksamen Menge einer Verbindung der Formel (II) 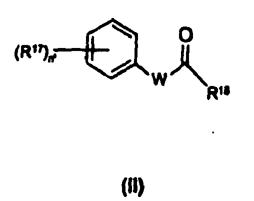 wobei die Symbole und indizes folgende Bedeutungen haben:
   W ist (W4); 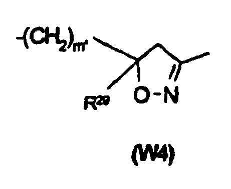
   R¹⁷ ist Halogen, Nitro, (C₁-C₄)-Alkyl, (C₁-C₂)-Haloalkyl oder (C₁-C₄)-Alkoxy;
   n' ist 0, 1, 2 oder 3;
   m' ist 0 oder 1;
   R¹⁸ ist ein Rest der Formel OR²⁴;
   R²⁴ ist Wasserstoff, (C₁-C₄)-Alkyl, Carboxy-(C₁-C₄)-alkyl, (C₁-C₄)-Alkoxycarbonyl-(C₁-C₄)-alkyl, und
   R²⁹ ist Wasserstoff, (C₁-C₄)-Alkyl, (C₁-C₄)-Haloalkyl, (C₃-C₇)-Cycloalkyl oder Phenyl, das unsubstitutiert oder durch einen oder mehrere Reste aus der Gruppe Halogen, (C₁-C₄)-Alkyl, (C₁-C₄)-Alkyl, (C₁-C₄)-Haloalkyl, Nitro, Cyano und (C₁-C₄)-Alkoxy substituiert ist,
   wobei Mischungen ausgenommen sind, bei denen der Safener die Formel (II) mit W=W4 mit m'=1 aufweist.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in der Formel (II) und nachfolgenden Formeln im allgemeinen die folgenden Definitionen.

Die Reste Alkyl, Alkoxy, Haloalkyl, können im Kohlenstoffgerüst jeweils geradkettig oder verzweigt sein. Alkylreste, auch in den zusammengesetzten Bedeutungen wie Alkoxy, Haloalkyl usw. haben 1 bis 4 C-Atome und, bedeuten z.B. Methyl, Ethyl, n- oder i-Propyl, n-, i-, t- oder 2-Butyl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet einen cyclischen Alkylrest mit 3 bis 7, besonders bevorzugt 3 bis 6 C-Atomen, beispielsweise Cyclopropyl, Cyclobutyl, Cyclopentyl und Cyclohexyl.

Halogen bedeutet Fluor, Chlor, Brom oder lod. Haloalkyl, bedeuten durch Halogen, vorzugsweise durch Fluor, Chlor und/oder Brom, insbesondere durch Fluor oder Chlor, teilweise oder vollständig substituiertes Alkyl, z.B. CF₃, CHF₂, CH₂F, CF₃CF₂, CH₂FCHCl, CCl₃, CHCl₂, CH₂CH₂Cl. Entsprechendes gilt für sonstige Halogen substituierte Reste.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)-Alkyl, (C₁-C₄)-Alkoxy, (C₁-C₄)-Haloalkyl, (C₁-C₄)-Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Von der Formel (II) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-lsomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Das Herbizid der Formel 3-2 ist (I) z.B. aus US 4 780,127 bekannt. Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Folgende Gruppen von Verbindungen sind insbesondere als Safener für den herbiziden Wirkstoff der Formel 3-2 geeignet:
Verbindungen vom Typ der 5-Benzyl- oder 5-Phenyl-2-isoxazolin-3-carbonsäure oder der 5,5-Diphenyl-2-isoxazolin-3-carbonsäure, (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A- 91/08202 beschrieben sind, oder der 5,5-Diphenyl-2-isoxazolin-carbonsäureethylester (II-9) oder -n-propylester (II-10) oder der 5-(4-Fluorphenyl)-5-phenyl-2-isoxazolin-3-carbonsäureethylester (II-11), wie sie in der WO-A-95/07897 beschrieben sind.

Die Safener (Antidote) der Formel (II), reduzieren oder unterbinden phytotoxische Effekte, die beim Einsatz des herbiziden Wirkstoffs der Formel 3-2 in Nutzpflanzenkulturen auftreten können, ohne die Wirksamkeit dieses herbiziden Wirkstoffs gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais, Reis und andere Kulturen ausgedehnt werden, in denen bisher ein Einsatz der Herbizide nicht möglich oder nur beschränkt, das heißt, in niedrigen Dosierungen mit wenig Breitenwirkung möglich war.

Der herbizide Wirkstoff und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäße Kombinationen sind vor allem Mais und Getreidekulturen (z.B. Weizen, Roggen, Gerste, Hafer), Reis, Sorghum, aber auch Baumwolle und Sojabohne, vorzugsweise Getreide, Reis und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen des Herbizids der Formel 3-2, das dadurch gekennzeichnet ist, daß eine antidotisch wirksame Menge einer Verbindung der Formel (II) vor, nach oder gleichzeitig mit dem herbiziden Wirkstoff auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit dem Herbizid, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener und deren Kombinationen mit dem herbiziden Wirkstoff der Formel 3-2 können auf verschiedene Art formuliert werden, je nachdem welche biologischen und/oder chemisch-physikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience. N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, Dimethylformamid, Xylol oder auch höhersiedende Kohlenwasserstoffe wie Aromaten, gesättige oder ungesättigte Aliphaten oder Alicyclen, oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: (C₆-C₁₈)-Alkylarylsulfonsaure Calzium-Salze, wie Cadodecylbenzolsulfonat, oder nichtionische Emulgatoren, wie Fettsäurepolyglykolester, (C₂-C₁₈)-Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxethylensorbitanester, wie Polyoxyethylensorbitanfettsäureester.

Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischem und Extrusion ohne festes Inertmaterial, hergestellt. Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gew.-%, insbesondere 0,1 bis 95 Gew.-%, Wirkstoffe der Formel (II) oder des Herbizid/Antidot-Wirkstoffgemischs 3-2 und (II) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoff, versprühbare Lösungen etwa 0,2 bis 20 Gew.-% Wirkstoff. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Mischungen in Mischungsformulierungen oder im Tank-Mix sind beispielsweise bekannte Wirkstoffe einsetzbar, wie sie in z.B. Weed Research 26, 441-445 (1986), oder "The Pesticide Manual", 10th edition, The British Crop Protection Council, 1994, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und - essigsäuremethylester; alachlor; alloxydim; ametryn; amidosulfuron; amitrol; AMS, d.h. Ammoniumsulfamat; anilofos; asulam; atrazin; azafenidine (DPX-R6447), azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil; bromuron; buminafos; busoxinone; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; chloransulam-methyl (XDE-565), chlorazifop-butyl, chlorbromuron; chlorbufam; chlorfenac; chlorflurecol-methyl; chloridazon; chlorimuron ethyl; chlornitrofen; chlorotoluron; chloroxuron; chlorpropham; chlorsulfuron; chlorthal-dimethyl; chlorthiamid; cinidon-ethyl, cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimethazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; epoprodan (MK-243), EPTC; esprocarb; ethalfluralin; ethametsulfuronmethyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569) etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; flufonacet (BAY-FOE-5043), fluazifop und fluazifop-P, florasulam (DE-570) und deren Ester, z.B. fluazifop-butyl und fluazifop-P-butyl; fluchloralin; flumetsulam; flumeturon; flumiclorac und dessen Ester (z.B. Pentylester, S-23031); flumioxazin (S-482); flumipropyn; flupoxam (KNW-739); fluorodifen; fluoroglycofenethyl; flupropacil (UBIC-4243); flupyrsulfuron-methyl natrium (DPX-KE459), fluridone; flurochloridone; fluroxypyr; flurtamone; fluthiacet-methyl (KIH-9201), fomesafen; fosamine; furyloxyfen; glufosinate; glyphosate; halosafen; halosulfuron und dessen Ester (z.B. Methylester, NC-319); haloxyfop und dessen Ester, haloxyfop-P (= R-haloxyfop) und dessen Ester; hexazinone; imazamethabenz-methyl; imazamox (AC-299263), imazapyr; imazaquin und Salze wie das Ammoniumsalz; imazethamethapyr; imazethapyr; imazosulfuron; iodosulfuron (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron, Methyl-2-[3-(4,6-dimethoxypyrimidin-2-yl)ureidosulfonyl]-4-methansulfonamidomethylbenzoat (WO 95/10507); methobenzuron; metobromuron; metolachlor; S-metolachlor, metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; N,N-Dimethyl-2-[3-(4,6-dimethoxypyrimidin-2-yl)ureidosulfonyl]-4-formylamino-benzamid (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; piributicarb; pirifenop-butyl; pretilachlor; primisulfuron-methyl; procyazine; prodiamine; profluralin; proglinazineethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyraflufen-ethyl (ET-751), pyrazon; pyrazosulfuron-ethyl; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und - ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; sulfentrazon (FMC-97285, F-6285); sulfazuron; sulfometuron-methyl; sulfosate (ICI-A0224); sulfosulfuron (MON-37500), TCA; tebutam (GCP-5544); tebuthiuron; tepraloxidim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-124085); thifensulfuron-methyl; thiobencarb; tiocarbazil; tralkoxydim; tri-allate; triasulfuron; triazofenamide; tribenuron-methyl; tridopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1H-tetrazol; UBH-509; D-489; LS 82-556; KPP-300; KPP-421, MT-146, NC-324; KH-218; DPX-N8189; DOWCO-535; DK-8910; V-53482; PP-600; MBH-001.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge des Herbizids der Formel 3-2. Sie kann innerhalb weiter Grenzen variiert werden, z.B. zwischen 0,001 und 10,0 kg/ha oder mehr an Herbizid, vorzugsweise liegt sie zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile einer Verbindung der Formel (II) oder eines Wirkstoffgemischs aus dem herbiziden Wirkstoff der Formel 3-2 und einem Safener der Formel (II) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (II) oder eines Wirkstoffgemischs aus dem herbiziden Wirkstoff der Formel 3-2 und einem Safener der Formel (II), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares oder suspendierbares Konzentrat wird erhalten, indem man 20 Gewichtsteile einer Verbindung der Formel (II) oder eines Wirkstoffgemischs aus dem herbiziden Wirkstoff der Formel 3-2 und einem Safener der Formel (II), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277° C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (II) oder eines Wirkstoffgemischs aus dem herbiziden Wirkstoff der Formel 3-2 und einem Safener der Formel (II), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man
   - 75 Gew.-Teile: einer Verbindung der Formel (II) oder eines Wirkstoffgemischs aus dem herbiziden Wirkstoff der Formel 3-2 und einem Safener der Formel (II)
   - 10 ": ligninsulfonsaures Calcium,
   - 5 ": Natriumlaurylsulfat,
   - 3 ": Polyvinylalkohol und
   - 7 ": Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   - 25 Gew.-Teil(e): einer Verbindung der Formel (II) oder eines Wirkstoffgemischs aus dem herbiziden Wirkstoff der Formel 3-2 und einem Safener der Formel (II)
   - 5 ": 2,2'-dinaphthylmethan-6,6'-disulfonsaures Natrium,
   - 2 ": oleoylmethyltaurinsaures Natrium,
   - 1 ": Polyvinylalkohol,
   - 17 ": Calciumcarbonat und
   - 50 ": Wasser
   auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### Biologische Beispiele

### Gewächshausversuche

### Nachauflauf

Samen beziehungsweise Rhizomstücke Mono- und dikotyler Schad- und Nutzpflanzen werden in Töpfen von 9 bis 13 cm Durchmesser in sandiger Lehmerde ausgelegt und mit Erde bedeckt. Hierzu alternativ werden für den Reistest Reispflanzen sowie in dieser Nutzpflanzenkultur unerwünschte Schadpflanzen in einem mit Wasser übersättigten Boden kultiviert. Im Dreiblattstadium, d.h. etwa drei Wochen nach Beginn der Aufzucht werden die Versuchspflanzen mit den als emulgierbare Konzentrate oder Stäubemittel formulierten Herbiziden und Safenern in Form wäßriger Dispersionen oder Suspensionen bzw. Emulsionen behandelt mit einer Wasseraufwandmenge von umgerechnet 300 bis 800l/ha in unterschiedlichen Dosierungen auf die grünen Pflanzenteile gesprüht oder beim Reistest auch in das Bewässerungswasser gegossen. Die Töpfe werden zur weiteren Kultivierung der Pflanzen im Gewächshaus unter optimalen Bedingungen gehalten. Die optische Bewertung der Schäden an Nutz- und Schadpflanzen erfolgt 2-3 Wochen nach der Behandlung. Die Versuchsergebnisse sind in Tabelle 1 zusammengestellt.

**Tabelle 1**

| Aufwandmenge: 100-300 g a.i./ha; Herbizid 3-1; Weizen | | |
|---|---|---|
| **Produkt Herbizid / Safener** | **Dosis [kg a.i./ha]** | **Schädigung [%] Weizen (Sorte Ralle)** |
| Herbizid 3-2 | 300 | 45 |
| Herbizid 3-2 | 200 | 30 |
| Herbizid 3-2 | 100 | 30 |
| Herbizid 3-2 / Safener II-9 | 300 + 300 | 10 |
| Herbizid 3-2 / Safener II-9 | 200 + 200 | 0 |
| Herbizid 3-2 / Safener II-9 | 100 + 100 | 0 |

| | | |
|---|---|---|
| Herbizid 3-2: Herbizid Beispiel Nr. 3-2 Safener II-9: 5,5-Diphenyl-2-isoxazolin-3-carbonsäureethylester | | |

## Patentansprüche

1. Herbizid wirksames Mittel, enthaltend eine Mischung aus
A. einer herbizid wirksamen Menge der Verbindung der Formel 3-2 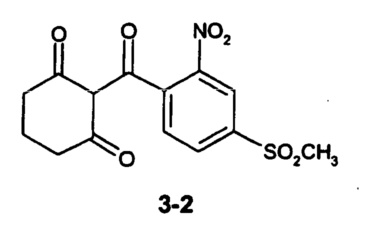 und
B. einer antidotisch wirksamen Menge einer Verbindung der Formel (II) 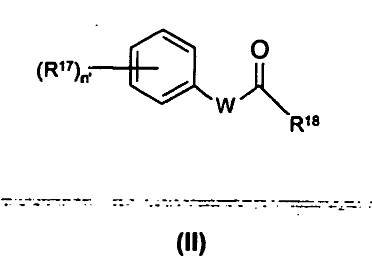 wobei die Symbole und Indizes folgende Bedeutungen haben:
W ist (W4); 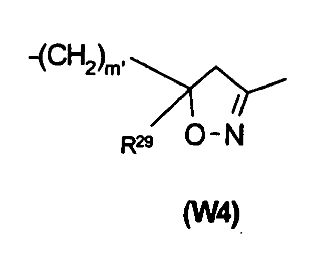
R¹⁷ ist Halogen, Nitro, (C₁-C₄)-Alkyl, (C₁-C₂)-Haloalkyl oder (C₁-C₄)-Alkoxy;
n' ist 0, 1, 2 oder 3;
m' ist 0 oder 1;
R¹⁸ ist ein Rest der Formel OR²⁴;
R²⁴ ist Wasserstoff, (C₁-C₄)-Alkyl, Carboxy-(C₁-C₄)-alkyl, (C₁-C₄)-Alkoxycarbonyl-(C₁-C₄)-alkyl, und
R²⁹ ist Wasserstoff, (C₁-C₄)-Alkyl, (C₁-C₄)-Haloalkyl, (C₃-C₇)-Cycloalkyl oder Phenyl, das unsubstituiert oder durch einen oder mehrere Reste aus der Gruppe Halogen, (C₁-C₄)-Alkyl, (C₁-C₄)-Haloalkyl, Nitro, Cyano und (C₁-C₄)-Alkoxy substituiert ist,
wobei Mischungen ausgenommen sind, bei denen der Safener die Formel (II) mit W=W4 mit m'=1 aufweist.

2. Herbizid wirksames Mittel gemäß Anspruch 1, worin das Gewichtsverhältnis Herbizid:Safener 1:100 bis 100:1 beträgt.

3. Herbizid wirksames Mittel gemäß Anspruch 1 oder 2, zusätzlich ein weiteres Herbizid enthaltend.

4. Herbizid wirksames Mittel gemäß Anspruch 3, worin das weitere Herbizid ein Sulfonylhamstoff ist.

5. Verfahren zur Bekämpfung von Schadpflanzen in Nutzpflanzenkulturen, **dadurch gekennzeichnet, daß** eine herbizid wirksame Menge eines herbizid wirksamen Mittels gemäß einem oder mehreren der Ansprüche 1 bis 4 auf die Schadpflanzen, Kulturpflanzen, Pflanzensamen oder die Fläche, auf der die Pflanzen wachsen, aufgebracht wird.

6. Verfahren gemäß Anspruch 5, **dadurch gekennzeichnet, daß** die Pflanzen aus der Gruppe Mais, Weizen, Roggen, Gerste, Hafer, Reis, Sorghum, Baumwolle und Soja stammen.

7. Verfahren gemäß Anspruch 5 oder 6, **dadurch gekennzeichnet, daß** die Pflanzen gentechnisch verändert sind.

8. Verwendung eines herbizid wirksamen Mittels gemäß einem oder mehreren der Ansprüche 1 bis 4 zur Bekämpfung von Schadpflanzen in Nutzpflanzenkulturen.

## Claims

1. A herbicidally active composition comprising a mixture of
A. a herbicidally active amount of the compound of the formula 3-2 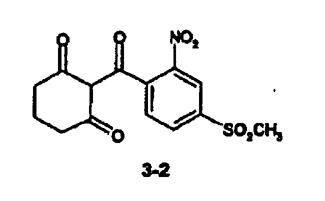 and
B. an antidote-effective amount of compound of the formula (II), 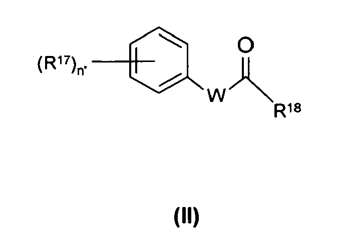 where the symbols and indices have the following meanings:
W is (W4); 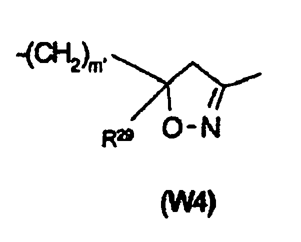
R¹⁷ is halogen, nitro, (C₁-C₄)alkyl, (C₁-C₂)haloalkyl or (C₁-C₄)alkoxy;
n' is 0, 1, 2 or 3;
m' is 0 or 1;
R¹⁸ is a radical of the formula OR²⁴;
R²⁴ is hydrogen, (C₁-C₄)alkyl, carboxy(C₁-C₄)alkyl, (C₁-C₄)-alkoxycarbonyl(C₁-C₄)alkyl; and
R²⁹ is hydrogen, (C₁-C₄)alkyl, (C₁-C₄)haloalkyl, (C₃-C₇)cycloalkyl or phenyl which is unsubstituted or substituted by one or more radicals selected from the group consisting of halogen, (C₁-C₄)alkyl, (C₁-C₄)haloalkyl, nitro, cyano and (C₁-C₄)alkoxy,
with the exception of mixtures in which the safener has the formula (II) with W=W4 with m'=1.

2. A herbicidally active composition as claimed in claim 1, in which the weight ratio of herbicide: safener is 1:100 to 100:1.

3. A herbicidally active composition as claimed in claim 1 or 2 which additionally comprises a further herbicide.

4. A herbicidally active composition as claimed in claim 3, wherein the further herbicide is a sulfonylurea.

5. A method of controlling harmful plants in crops of useful plants, which comprises applying a herbicidally active amount of a herbicidally active composition as claimed in one or more of claims 1 to 4 to the harmful plants, the crop plants, the seeds of the plants or the area on which the plants grow.

6. The method as claimed in claim 5, wherein the plants belong to the group consisting of maize, wheat, rye, barley, oats, rice, sorghum, cotton and soya.

7. The method as claimed in claim 5 or 6, wherein the plants are genetically altered plants.

8. The use of a herbicidally active composition as claimed in one or more of claims 1 to 4 for controlling harmful plants in crops of useful plants.

## Revendications

1. Agent à efficacité herbicide contenant un mélange constitué par
A. une quantité efficace herbicide du composé de la formule 3-2. 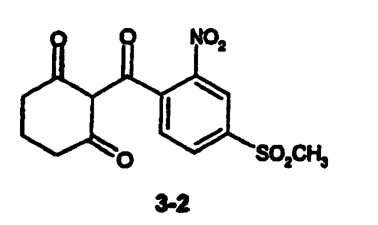 et
B. une quantité à efficacité d'antidote d'un composé de la formule (II) 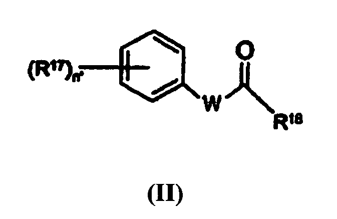 dans laquelle les symboles et les indices ont les significations suivantes :
W est (W4) : 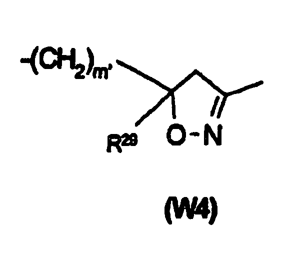
R¹⁷ est un halogène, un groupe nitro, alkyle en C₁-C₄, haloalkyle en C₁-C₂ ou alcoxy en C₁-C₄ ;
n' est égal à 0, 1, 2 ou 3 ;
m'est égal à 0 ou à 1 ;
R¹⁸ est un reste de la formule OR²⁴ ;
R²⁴ est l'hydrogène, un groupe alkyle en C₁-C₄, carboxy-(alkyle en C₁-C₄), (alcoxy en C₁-C₄)-carbonyl-(alkyle en C₁-C₄), et
R²⁹ est l'hydrogène, un groupe alkyle en C₁-C₄, haloalkyle en C₁-C₄, cycloalkyle en C₃-C₇ ou phényle, lequel est non substitué ou est substitué par un ou plusieurs restes du groupe constitué par un halogène, un groupe alkyle en C₁-C₄, haloalkyle en C₁-C₄, nitro, cyano et alcoxy en C₁-C₄,
dans lequel des mélanges, dans lesquels le phytoprotecteur présente la formule (II) avec W=W4 avec m'=1, sont exclus.

2. Agent à efficacité herbicide selon la revendication 1, dans lequel le rapport massique herbicide:phytoprotecteur est de 1:100 à 100:1.

3. Agent à efficacité herbicide selon la revendication 1 ou 2, contenant de plus un autre herbicide.

4. Agent à efficacité herbicide selon la revendication 3, dans lequel l'autre herbicide est une sulfonylurée.

5. Procédé pour la lutte contre les mauvaises herbes dans des cultures de plantes utiles, **caractérisé en ce que** l'on applique une quantité efficace herbicide d'un agent à efficacité herbicide selon l'une ou plusieurs des revendications 1 à 4 sur les mauvaises herbes, les plantes de culture, les grains de plante ou à la surface cultivable.

6. Procédé selon la revendication 5, **caractérisé en ce que** les plantes proviennent du groupe comprenant le maïs, le blé, le seigle, l'orge, l'avoine, le riz, le sorgho, le coton et le soja.

7. Procédé selon la revendication 5 ou 6, **caractérisé en ce que** les plantes sont génétiquement modifiées.

8. Utilisation d'un agent à efficacité herbicide selon l'une ou plusieurs des revendications 1 à 4 pour la lutte contre les mauvaises herbes dans des cultures de plantes utiles.
